Europäisches Patentamt

European Patent Office

Office européen des brevets

(11) Publication number: **0 174 684**
**B1**

## EUROPEAN PATENT SPECIFICATION

(45) Date of publication of patent specification: **19.10.88**

(21) Application number: **85201352.3**

(22) Date of filing: **23.08.85**

(51) Int. Cl.[4]: **C 08 L 69/00, C 08 K 3/16, C 08 K 3/28, C 08 K 3/30**

(54) Self-extinguishing polycarbonate composition.

(30) Priority: **04.09.84 IT 2251684**
**04.09.84 IT 2251784**

(43) Date of publication of application:
**19.03.86 Bulletin 86/12**

(45) Publication of the grant of the patent:
**19.10.88 Bulletin 88/42**

(84) Designated Contracting States:
**AT BE CH DE FR GB LI LU NL SE**

(56) References cited:
**EP-A-0 024 331**
**EP-A-0 086 353**

**CHEMICAL ABSTRACTS, vol. 83, no. 26, 29th December 1975, page 39, no. 207070g, Columbus, Ohio, US; & JP - A - 75 83 448 (TEIJIN CHEMICALS, LTD.) 05-07-1975**

**CHEMICAL ABSTRACTS, vol.84, no. 10, 8th March 1976, no. 60599w, Columbus, Ohio, US; & JP - A - 75 141 639 (TEIJIN CHEMICALS, LTD.) 14-11-1975**

**CHEMICAL ABSTRACTS, vol. 82, no. 11, 2nd June 1975, page 40, no. 141027u, Columbus, Ohio, US; 74 125 464 (TEIJIN CHEMICALS, LTD.) 30-11-1974**

(73) Proprietor: **ENICHEM TECNORESINE S.p.A.**
**Via Ruggero Settimo 55**
**I-90139 Palermo (IT)**

(72) Inventor: **Dozzi, Giovanni**
**Corso Lodi 82**
**I-20139 Milan (IT)**

(74) Representative: **Roggero, Sergio et al**
**Ing. Barzanò & Zanardo Milano S.p.A.**
**Via Borgonuovo 10**
**I-20121 Milano (IT)**

Courier Press, Leamington Spa, England.

**Description**

This invention relates to self-extinguishing polycarbonate compositions.

The prior art has tendered a number of suggestions for solving the problem of flame resistance in synthetic resin in general, and in polycarbonate resins in particular.

Highly halogen-substituted organic compounds, optionally supplemented by Sb oxides, have been suggested by J. T. Howarth et al, Plastic World, pages 64—74, March 1973), but it has been ascertained that these additions are not entirely harmless since degradation of the polycarbonate may occur during processing, accompanied by a worsening of the physical and chemical properties of the polycarbonate concerned, as outlined, for example, by US—A—3 334 154 and US—A—4 153 595.

Tetrahalogenated bisphenol A derivatives have been suggested as comonomers in copolymerization with bisphenol A as such, to improve the flame resistance of the polycarbonate material thus obtained, but the halogen content is objectionable since it originates a decay of the properties of the final polymerizate and, moreover, the evolution of hydrogen and hydrogen halides during moulding and in the combustion of the polymer creates environmental pollution and health problems, as outlined in US—A—4 046 836 and US—A—3 775 367 and US—A—4 100 130, inter alia. Alkali metal- or alkaline earth metal salts of aryl- or alkyl-sulphonic acids have also been suggested, such as by US—A—3 940 366, US—A—3 933 734, US—A—4 104 253, US—A—4 153 195, and US—A—4 214 062.

Other suggestions came, recently, from C.A. *83*, 207070g, C.A. *84*, 60599w, C.A. *82*, 141027u, EP—A—24 331, EP—A—96 444 and EP—A—103 922.

More particularly, EP—A—96 444 and EP—A—103 922 have taught that salts of metals of the Groups IA, IB, IIA and IIB of the Periodic Table of the Elements prepared with particular carboxylic compounds improve the self-extinguishability of polycarbonate resins without impairing their thermal stability or other typical properties of polycarbonates.

The self-extinguishability of polycarbonates so treated can further be improved by the use of certain auxiliary agents which can either be inorganic or organic and are exemplified in the literature just now cited.

In order to solve the problems outlined above, and to remove the shortcomings of the prior art compositions, the present invention provides:

A composition of self-extinguishing polycarbonates, having a molecular weight of from 10.000 to 100.000, containing:

A) at least one additive consisting of an inorganic metal salt having the general formula $(XSO_3)_nM$, $M(XO_3)_n7$, $M(NO_3)_n$, $M(CNO)_n$, $M(SCN)_n$, $M[Fe(CN)_6]_n$, wherein X is a halogen, M is a metal of the I and/or IIA and B Groups of the Periodic Table of the Elements, and n is 1 or 2;

and, optionally, not more than 3 phr (parts per 100 parts of resin) of

B) at least one auxiliary agent selected from among:

i) oligomeric, or polymeric halogenated ethers;

ii) oligomers from phosgene and tetrahalogenated bisphenol A with phenyl end groups and/or esters of tetrahalogenated bisphenol A with organic carboxylic acids;

iii) halogenated polyethylene;

iv) halogenated imides;

v) octabromodiphenyloxide, decabromodiphenyl oxide, 1,2-bis(2,4,6-tribromophenoxy)-ethane, tetrabromobisphenol A-bis-(2,3-dibromopropyl ether), wherein the component A, in the absence of auxiliary agents, is added in an amount equal to, or lower than, 3 phr, whilst in the presence of any auxiliary agent, it is added in an amount equal to, or lower than 2 phr.

According to a preferential embodiment, the component A is selected from among: potassium fluorosulphonate, potassium chlorosulphonate, calcium chlorosulphonate, zinc chlorosulphonate, potassium bromate, sodium bromate, potassium iodate, potassium nitrate, sodium nitrate, potassium cyanate, potassium thiocyanate, sodium thiocyanate, and potassium ferrocyanide.

Another preferred embodiment is that wherein the component B is selected from among: brominated polyphenylene oxide (Br about 67%), oligomer (polymerization degree from 3 to 6) from phosgene and tetrabromobisphenol A with phenyl end groups, tetrabromobisphenol A-bis-(2-hydroxyethyl ether)-bis-acrylate, polytetrafluoroethylene, N,N'-ethylene-bis-tetrabromophthalimide.

It is furthermore preferred that the component A, in the absence of any auxiliary agents, is added in an amount equal to, or lower than, 0,6 phr, whilst in the presence of any auxiliary agent, it is present in an amount equal to, or lower than, 0,4 phr.

Efficient compositions are obtained when the component B is added in an amount equal to, or lower than, 0,8 phr.

As regards the salification, the metals of the Group I for forming the salts of component A are sodium and potassium.

Preferred forms of the auxiliary agents are: octabromodiphenyloxide, decabromodiphenyloxide, 1,2-bis-(2,4,6-tribromophenoxy)-ethane, tetrabromobisphenol A bis(2,3-dibromopropyl ether), brominated polyphenyleneoxide (Br = about 67%), oligomer (n = 3—6) from phosgene and tetrabromobisphenol A containing phenyl end groups, tetrabromobisphenol A bis-(2-hydroxyethylene)-bis-acrylate, polytetrafluoroethylene, N,N'-ethylene-bis-tetrabromophthalimide.

The auxiliary agents may be used individually and/or as mixtures with other auxiliary agents of the same class and/or belonging to different classes as defined above.

The salts of the metals of the I and/or of the II A and B Groups of the Periodic Table of the elements of the said particular inorganic compounds are used, in the absence of auxiliary agents, in an amount equal to or lower than 3 phr and preferably at levels in the overall equal to or lower than 0.6 phr (moreover, when two or more salts mixed with each other are used, the respective amounts may be further decreased), whilst in the presence of auxiliary agents they are used in an amount equal to or lower than 2 phr, and preferably at levels in the overall equal to or lower than 0.4 phr.

The individual auxiliary agents or their mixtures are used in an amount equal to or lower than 3 phr and preferably in an amount in the overall equal to or lower than 0.8 phr.

The addition of such additives is efficacious with any types of aromatic polycarbonates with viscosimetric average molecular weight comprised within the range of from 10,000 to 100,000; preferably of from 20,000 to 50,000, and in particular with the polycarbonates as prepared by means of the reaction of an aromatic diol, e.g., bisphenol A [2,2-bis-(4-hydroxyphenyl)-propane] with a precursor of carbonate group. The preparation of polycarbonates by means of the known interface polycondensation technique is usually carried out in the presence of a molecular weight adjuster, of an acid-acceptor, and of a catalyst.

The precursor of the carbonate group generally used is carbonyl chloride, but other halogenides, haloformates or esters of carbonic acid may be used as well in processes carried out in the absence of solvent. As the bisphenol, in addition to the bisphenol A, there may be used: bis-(hydroxyphenyl)-alkanes, such as bis-(4-hydroxyphenylmethane, 2,2-bis-(4-hydroxy-3-methylphenyl)-propane, hydroquinone, resorcinol, bis-(4-hydroxyphenyl)-p-diisopropyl-benzene.

Polyfunctional aromatic compounds, with at least three functional groups may be used to yield branched polycarbonates.

It is of course possible to use two or more bis-phenols. The several products being the object of the present invention can be used as flame retardants not only for the straight polycarbonate, but also for the branched one, for mixtures thereof, or for polycarbonate-containing polymeric alloys. The polycarbonate may moreover contain also other additives such as pigments, thermo-oxidation stabilizers, lubricants, dyestuffs, fillers, U.V. radiation absorbers and so forth.

Examples 1—61

100 Parts of aromatic polycarbonate prepared by means of the reaction of bisphenol A and phosgene are mixed with the additives and the auxiliary agents as reported in Table 1.

The mixture of additives and polycarbonate, previously homogenized by milling in a Retsch mill, is introduced into an extruder heated at about 260°C and the extrudate is subsequently cooled and granulated.

The granules have been moulded both by compression moulding (285°C, 40 kg/cm$^2$) (39 bar), and by injection moulding at about 300°C, to obtain different types of specimens: specimen A (about 127 × 12.7 × 3.2—1.6 mm), specimen B (about 127 × 6.5 × 3.2 mm) and specimen C (about 65 × 55 × 3.2 mm).

The A specimens, five for each formulation reported in Table 1, are submitted to the fire-performance test for the rating of the materials according to the UL—94 Standard of "Underwriters Laboratories". According to this procedure, the materials are respectively rated as V—0, V—1, V—2 on the basis of the results of the five specimens and according to the following criteria:

94 V—0: No one specimen must show a combustion time longer than 10 seconds after the removal of the Bunsen burner's flame. The total combustion time for the five specimens (ten ignitions) must not exceed 50 seconds. No one specimen must make burning particles drip, igniting the surgical cotton placed along the vertical beneath the specimen at the distance of 305 mm.

94 V—1: No one specimen must show a combustion time longer than 30 seconds after the removal of the flame of Bunsen burner. The total combustion time for the five specimens (ten ignitions) must not exceed 250 seconds. No one specimen must let ignited particles drip, igniting the surgical cotton placed along the vertical beneath the specimen at the distance of 305 mm.

94 V—2: No one specimen must show a combustion time longer than 30 seconds after the removal of the flame of the Bunsen burner. The total combustion time for the five specimens (ten ignitions) must not exceed 250 seconds. The specimens may let ignited particles drip, igniting the surgical cotton placed along the vertical beneath the specimen at the distance of 305 mm.

Moreover, the five specimens must all pass the UL—94 test, otherwise they are rated on the basis of the worst specimen. As an example, if one specimen has a V—2 behaviour, and the other four specimens have a V—0 behaviour, all the five specimens receive a V—2 rating.

If a specimen continues to burn for more than 30 seconds after the removal of the Bunsen burner flame, it cannot be rated under the UL—94 Standard, but it is reported, in the present invention, as a combustible polymer. The B specimens are submitted to the test for fire-performance, according to the ASTM D 2863—77 standard, which correlates the flammability of a polymeric material to the concentration of oxygen in the atmosphere under which the sample is. This correlation is expressed as LOI (Limiting Oxygen Index), i.e., the lowest oxygen percentage capable of supporting the combustion of the specimen under a nitrogen-oxygen atmosphere impinging upon the same specimen from down upwards. The C

3

**0 174 684**

specimens have been used for measurings of light transmission by using an XL211 Gardner instrument. To the purpose of better illustrating the present invention, in Table 1 the results are reported of measurements carried out on virgin polycarbonate, indicated as the reference polymer, and on polycarbonate after the addition of the salts of inorganic compounds and possibly in combination with the auxiliary agents, which are the object of the present invention. To render the comparison with the prior art more conspicuous, Examples 1, 25 and 58 of the ensuing tabulations are merely comparative examples and, more particularly, Example 1 uses potassium bromide alone, Example 25 uses potassium bromide supplemented by decabromodiphenyloxide, and Example 58 uses EDTA sodium and calcium salt plus brominated polyphenylene oxide: these particular examples show that, even with the auxiliary agents suggested by the present invention, the results are poor if the component A as defined above is not present in the overall polycarbonate composition.

TABLE 1

(Clear Polycarbonate)

| Example | FR Additive (phr) | Auxiliary Agent (phr) |
|---------|-------------------|------------------------|
| R | Reference (Polycarbonate with no additive) | |
| 1 | Potassium Bromide (0.1) | |
| 2 | Potassium fluorosulphonate (0.1) | |
| 3 | Potassium chlorosulphonate (0.2) | |
| 4 | Calcium chlorosulphonate (0.2) | |
| 5 | Zinc chlorosulphonate (0.2) | |
| 6 | Potassium bromate (0.1) | |
| 7 | Potassium bromate (0.25) | |
| 8 | Sodium bromate (0.3) | |
| 9 | Potassium iodate (0.1) | |
| 10 | Potassium nitrate (0.1) | |
| 11 | Potassium nitrate (0.3) | |
| 12 | Sodium nitrate (0.3) | |
| 13 | Potassium cyanate (0.05) | |
| 14 | Potassium thiocyanate (0.01) | |

0 174 684

(follows Table 1)

| Example | FR Additive (phr) | Auxiliary Agent (phr) |
|---|---|---|
| 15 | Potassium thiocyanate (0.03) | |
| 16 | Sodium thiocyanate (0.025) | |
| 17 | Potassium ferrocyanide (0.1) | |
| 18 | Potassium bromate (0.15) + potassium fluorosulphonate (0.02) | |
| 19 | Potassium bromate (0.15) + potassium thiocyanate (0.01) | |
| 20 | Potassium nitrate (0.15) + potassium thiocyanate (0.01) | |
| 21 | Potassium ferrocyanide (0.03) + potassium bromate (0.01) | |
| 22 | Potassium ferrocyanide (0.03) + potassium thiocyanate (0.01) | |
| 23 | Potassium ferrocyanide (0.02) + EDTA potassium salt (0.01) | |

0 174 684

(follows Table 1)

| Total combustion time of 5 specimens (10 ignitions), seconds | Max. combustion time per specimen (2 ignitions), seconds | Number of burning drops per 5 specimens igniting the cotton | UL-94 rating (3.2 mm) | LOI % | MFI (300°C; 1.2 kg) (g/10') | Transmitted light, % |
|---|---|---|---|---|---|---|
| 263 | 77 | 8 | BURNS | 26 | 5.5 | 88.9 |
| 98 | 26 | 4 | V-2 | 31 | 5.6 | 87.7 |
| 39 | 9 | 0 | V-0 | 34 | 6.0 | 87.5 |
| 107 | 25 | 2 | V-2 | 30 | 6.2 | 85.7 |
| 134 | 29 | 5 | V-2 | 30 | 6.1 | -- |
| 92 | 28 | 5 | V-2 | 30 | 6.0 | -- |
| 76 | 23 | 1 | V-2 | 32 | 5.7 | 87.3 |
| 31 | 9 | 0 | V-0 | 35 | 5.9 | 86.2 |
| 37 | 10 | 0 | V-0 | 34 | 6.0 | 84.0 |
| 61 | 20 | 0 | V-1 | 34 | 5.6 | 86.9 |
| 70 | 24 | 0 | V-1 | 32 | 6.0 | 85.7 |
| 36 | 10 | 0 | V-0 | 33 | 6.3 | -- |
| 68 | 20 | 0 | V-1 | 32 | 6.5 | -- |
| 54 | 16 | 0 | V-1 | 33 | 5.9 | 87.8 |
| 67 | 16 | 3 | V-2 | 30 | 5.9 | 88.4 |
| 30 | 9 | 0 | V-0 | 35 | 6.6 | 88.0 |

0 174 684

(follows Table 1)

| Total combustion time of 5 specimens (10 ignitions), seconds | Max. combustion time per specimen (2 ignitions), seconds | Number of burning drops per 5 specimens igniting the cotton | UL-94 rating (3.2 mm) | LOI % | MFI (300°C; 1.2 kg) (g/10') | Transmitted light, % |
|---|---|---|---|---|---|---|
| 51 | 17 | 0 | V-1 | 33 | 6.2 | 88.1 |
| 38 | 9 | 0 | V-0 | 34 | 6.1 | -- |
| 39 | 10 | 0 | V-0 | 35 | 5.9 | 87.0 |
| 40 | 9 | 0 | V-0 | 34 | 6.1 | 87.1 |
| 36 | 8 | 0 | V-0 | 34 | 6.2 | 85.8 |
| 26 | 7 | 0 | V-0 | 35 | 5.8 | 86.0 |
| 27 | 8 | 0 | V-0 | 36 | 6.1 | 86.3 |
| 41 | 10 | 0 | V-0 | 33 | 6.2 | 87.6 |

0 174 684

(follows Table 1)

| Example | FR Additive (phr) | Auxiliary Agent (phr) |
|---|---|---|
| 24 | | Decabromodiphenyloxide (0.8) |
| 25 | Potassium bromide (0.3) | Decabromodiphenyloxide (0.3) |
| 26 | Potassium fluorosulphonate (0.04) | |
| 27 | Potassium fluorosulphonate (0.04) | Decabromodiphenyloxide (0.1) |
| 28 | Potassium fluorosulphonate (0.04) | Oligomer from phosgene and tetrabromo-bisphenol A (0.1) |
| 29 | Potassium chlorosulphonate (0.2) | |
| 30 | Potassium chlorosulphonate (0.2) | Decabromo diphenyloxide (0.2) |
| 31 | Calcium chlorosulphonate (0.2) | |
| 32 | Calcium chlorosulphonate (0.2) | Decabromo diphenyloxide (0.3) |
| 33 | Zinc chlorosulphonate (0.2) | |
| 34 | Zinc chlorosulphonate (0.2) | Decabromodiphenyloxide (0.3) |
| 35 | Potassium bromate (0.04) | |
| 36 | Potassium bromate (0.04) | Decabromodiphenyloxide (0.35) |
| 37 | Potassium bromate (0.07) | Octabromodiphenyloxide (0.1) |
| 38 | Potassium bromate (0.07) | 1,2-bis-(2,4,6-tribromophenoxy)-ethane (0.1) |

(follows Table 1)

| Example | FR Additive (phr) | Auxiliary Agent (phr) |
|---|---|---|
| 39 | Sodium bromate (0.1) | Decabromodiphenyloxide (0.1) |
| 40 | Potassium iodate (0.07) | Decabromodiphenyloxide (0.1) |
| 41 | Potassium nitrate (0.025) | |
| 42 | Potassium nitrate (0.025 | Decabromodiphenyloxide (0.3) |
| 43 | Potassium nitrate (0.07) | Octabromodiphenyloxide (0.1) |

| Total combustion time of 5 specimens (10 ignitions), seconds | Max. combustion time per specimen (2 ignitions), seconds | Number of burning drops per 5 specimens igniting the cotton | UL-94 rating (3.2 mm) | LOI % | MFI (300°C; 1.2 kg) (g/10') | Transmitted light, % |
|---|---|---|---|---|---|---|
| 263 | 77 | 8 | BURNS | 26 | 5.5 | 88.9 |
| 86 | 20 | 5 | V-2 | 30 | 5.6 | 88.5 |
| 73 | 21 | 0 | V-1 | 32 | 5.6 | 86.1 |
| 75 | 23 | 2 | V-2 | 30 | 5.7 | 88.3 |
| 40 | 10 | 0 | V-0 | 37 | 5.7 | 88.0 |
| 36 | 9 | 0 | V-0 | 36 | 5.7 | 88.2 |
| 107 | 25 | 2 | V-2 | 30 | 6.2 | 85.7 |
| 68 | 23 | 0 | V-1 | 32 | 6.2 | 85.1 |
| 134 | 29 | 5 | V-2 | 30 | 6.1 | -- |
| 87 | 20 | 0 | V-1 | 34 | 6.0 | -- |
| 92 | 28 | 5 | V-2 | 30 | 6.0 | -- |
| 68 | 17 | 0 | V-1 | 33 | 6.1 | -- |
| 95 | 26 | 3 | V-2 | 32 | 5.5 | 87.4 |
| 40 | 10 | 0 | V-0 | 33 | 5.6 | 87.0 |
| 39 | 10 | 0 | V-0 | 36 | 5.7 | 87.0 |
| 36 | 9 | 0 | V-0 | 35 | 5.6 | 87.1 |

(follows Table 1)

| Total combustion time of 5 specimens (10 ignitions), seconds | Max. combustion time per specimen (2 ignitions), seconds | Number of burning drops per 5 specimens ignit ing the cotton | UL-94 rating (3.2 mm) | LOI % | MFI (300°C; 1.2 kg) (g/10') | Transmitted light, % |
|---|---|---|---|---|---|---|
| 41 | 9 | 0 | V-0 | 33 | 5.9 | 86.6 |
| 39 | 10 | 0 | V-0 | 36 | 5.6 | 87.8 |
| 102 | 25 | 2 | V-2 | 30 | 5.8 | 87.3 |
| 35 | 9 | 0 | V-0 | 34 | 5.9 | 87.0 |
| 27 | 9 | 0 | V-0 | 36 | 6.1 | 86.4 |

(follows Table 1)

| Example | FR Additive (phr) | Auxiliary Agent (phr) |
|---|---|---|
| 44 | Potassium nitrate (0.07) | Tetrabromobisphenol A - bis-(2,3-dibromo-propylether) (0.1) |
| 45 | Potassium cyanate (0.035) | |
| 46 | Potassium cyanate (0.035) | Decabromodiphenyloxide (0.1) |
| 47 | Potassium thiocyanate (0.01) | |
| 48 | Potassium thiocyanate (0.01) | Brominated polyphenyleneoxide (0.1) (Br = about 67%) |
| 49 | Potassium thiocyanate (0.01) | Tetrabromobisphenol A - bis(2-hydroxyethyl) - bisacrylate (0.15) |
| 50 | Sodium thiocyanate (0.025) | |
| 51 | Sodium thiocyanate (0.025) | Oligomer from phosgene and tetrabromo-bis-phenol A (*) (0.1) |
| 52 | Potassium ferrocyanide (0.04) | |
| 53 | Potassium ferrocyanide (0.04) | Decabromodiphenyloxide (0.1) |
| 54 | Potassium ferrocyanide (0.02) + potassium nitrate (0.01) | Decabromodiphenyloxide (0.1) |
| 55 | Potassium ferrocyanide (0.02) + sodium thiocyanate (0.01) | Decabromodiphenyloxide (0.1) |

(follows Table 1)

(*)

(follows Table 1)

| Total combustion time of 5 specimens (10 ignitions), seconds | Max. combustion time per specimen (2 ignitions), seconds | Number of burning drops per 5 specimens igniting the cotton | UL 94 rating (3.2 mm) | LOI % | MFI (300°C; 1.2 kg) (g/10') | Transmitted light, % |
|---|---|---|---|---|---|---|
| 41 | 10 | 0 | V-0 | 36 | 6.1 | 86.1 |
| 63 | 16 | 1 | V-2 | 32 | 5.9 | 87.8 |
| 24 | 7 | 0 | V-0 | 35 | 6.0 | 87.5 |
| 67 | 16 | 3 | V-2 | 30 | 5.9 | 88.4 |
| 33 | 8 | 0 | V-0 | 35 | 5.9 | 86.1 |
| 29 | 7 | 0 | V-0 | 35 | 6.0 | 88.2 |
| 51 | 17 | 0 | V-1 | 33 | 6.2 | 88.0 |
| 35 | 9 | 0 | V-0 | 36 | 6.2 | 88.0 |
| 82 | 19 | 0 | V-1 | 33 | 5.7 | 87.1 |
| 18 | 5 | 0 | V-0 | 37 | 5.7 | 87.0 |
| 33 | 8 | 0 | V-0 | 36 | 5.6 | 87.2 |
| 26 | 6 | 0 | V-0 | 36 | 5.6 | 87.5 |

(follows Table 1)

Opaque Polycarbonate

| Example | FR Additive (phr) | Auxiliary Additive (phr) |
|---|---|---|
| 56 | Potassium bromate (0.15) | N,N'-ethylenebistetrabromophthalimide (0.7) + polytetrafluoroethylene (0.1) |
| 57 | Potassium nitrate (0.15) | Decabromo diphenyloxide (0.7) + polytetra fluoroethylene (0.1) |
| 58 | EDTA sodium and calcium salt (0.15) | Brominated polyphenyleneoxide (0.8) (Br = about 67%) |
| 59 | Potassium thiocyanate (0.01) + EDTA sodium and calcium salt (0.15) | Brominated polyphenyleneoxide (0.8) (Br = about 67%) |
| 60 | Potassium ferrocyanide (0.05) + potassium thiocyanate (0.015) | N,N'-ethylenebistetrabromophthalimide (0.5) |
| 61 | Potassium ferrocyanide (0.05) + potassium thiocyanate (0.015) | N,N'-ethylenebistetrabromophthalimide (0.5) |

NOTE: The samples nos. 56, 57 and 60 contain black pigment; the samples nos. 58, 59 and 61 contain red pigment.

(follows Table 1)

| Total combustion time of 5 specimens (10 ignitions), seconds | Max. combustion time per specimen (2 ignitions), seconds | Number of burning drops per 5 specimens igniting the cotton | UL-94 rating (3.2 mm) | LOI % | MFI (300°C. 1.2 kg) (g/10') |
|---|---|---|---|---|---|
| 62 | 16 | 8 | V-2 | 27 | 5.1 |
| 21 | 5 | 0 | V-0 | 40 | 5.6 |
| 17 | 4 | 0 | V-0 | 39 | 6.1 |
| 54 | 16 | 0 | V-1 | 37 | 5.8 |
| 27 | 9 | 0 | V-0 | 38 | 5.8 |
| 19 | 7 | 0 | V-0 | 37 | 5.9 |
| 30 | 8 | 0 | V-0 | 37 | 6.1 |

# 0 174 684

## Claims for the Contracting States: BE CH DE FR GB LI LU NL SE

1. A composition of self-extinguishing polycarbonates, having a molecular weight of from 10.000 to 100.000, containing:

A) at least one additive consisting of an inorganic metal salt having the general formula $(XSO_3)_nM$, $M(XO_3)_n$, $M(NO_3)_n$, $M(CNO)_n$, $M(SCN)_n$, $M[Fe(CN)_6]_n$, wherein X is a halogen, M is a metal of the I and/or IIA and B Groups of the Periodic Table of the Elements, and n is 1 or 2;

and, optionally, not more than 3 phr (parts per 100 parts of resin) of

B) at least one auxiliary agent selected from among:

i) oligomeric, or polymeric halogenated ethers;

ii) oligomers from phosgene and tetrahalogenated bisphenol A with phenyl end groups and/or esters of tetrahalogenated bisphenol A with organic carboxylic acids;

iii) halogenated polyethylene;

iv) halogenated imides;

v) octabromodiphenyloxide, decabromodiphenyl oxide, 1,2-bis(2,4,6-tribromophenoxy)-ethane, tetrabromobisphenol A-bis-(2,3-dibromopropyl ether), wherein the component A, in the absence of auxiliary agents, it is added in an amount equal to, or lower than, 3 phr, whilst in the presence of any auxiliary agent, it is added in an amount equal to, or lower than 2 phr.

2. Composition according to claim 1, wherein the component A is selected from among: potassium fluorosulphonate, potassium chlorosulphonate, calcium chlorosulphonate, zinc chlorosulphonate, potassium bromate, sodium bromate, potassium iodate, potassium nitrate, sodium nitrate, potassium cyanate, potassium thiocyanate, sodium thiocyanate, and potassium ferrocyanide.

3. Composition according to claim 1, wherein the component B is selected from among: brominated polyphenylene oxide (Br about 67%), oligomer (polymerization degree from 3 to 6) from phosgene and tetrabromobisphenol A with phenyl end groups, tetrabromobisphenol A-bis-(2-hydroxyethyl ether)-bis-acrylate, polytetrafluoroethylene, N,N'-ethylene-bis-tetrabromophthalimide.

4. Composition according to claim 1, wherein the component A, in the absence of any auxiliary agents, is added in an amount equal to, or lower than, 0,6 phr, whilst in the presence of any auxiliary agent, it is present in an amount equal to, or lower than, 0,4 phr.

5. Composition according to claim 1, wherein the component B is added in an amount equal to, or lower than, 0,8 phr.

6. Composition according to claim 1, wherein the metals of the Group I for forming the salts of component A are sodium and potassium.

## Claims for the Contracting State: AT

1. Process for preparing a self-extinguishing polycarbonate composition, characterized in that it comprises the step of adding, to a polycarbonate having a molecular weight comprised between 10.000 and 100.000, the following self-extinction promoting agents:

A) at least one additive consisting of an inorganic metal salt having the general formula $(XSO_3)_nM$, $M(XO_3)_n$, $M(NO_3)_n$, $M(CNO)_n$, $M(SCN)_n$, $M[Fe(CN)_6]_n$, wherein X is a halogen, M is a metal of the I and/or IIA and B Groups of the Periodic Table of the Elements, and n is 1 or 2;

and, optionally, not more than 3 phr (parts per 100 parts of resin) of

B) at least one auxiliary agent selected from among:

i) oligomeric, or polymeric halogenated ethers;

ii) oligomers from phosgene and tetrahalogenated bisphenol A with phenyl end groups and/or esters of tetrahalogenated bisphenol A with organic carboxylic acids;

iii) halogenated polyethylene;

iv) halogenated imides;

v) octabromodiphenyloxide, decabromodiphenyl oxide, 1,2-bis(2,4,6-tribromophenoxy)-ethane, tetrabromobisphenol A-bis-(2,3-dibromopropyl ether), wherein the component A, in the absence of auxiliary agents, is added in an amount equal to, or lower than, 3 phr, whilst in the presence of any auxiliary agent, it is added in an amount equal to, or lower than 2 phr.

2. Process according to claim 1, characterized in that the component A is selected from among: potassium fluorosulphonate, potassium chlorosulphonate, calcium chlorosulphonate, zinc chlorosulphonate, potassium bromate, sodium bromate, potassium iodate, potassium nitrate, sodium nitrate, potassium cyanate, potassium thiocyanate, sodium thiocyanate, and potassium ferrocyanide.

3. Process according to claim 1, characterized in that the component B is selected from among: brominated polyphenylene oxide (Br about 67%), oligomer (polymerization degree from 3 to 6) from phosgene and tetrabromobisphenol A with phenyl end groups, tetrabromobisphenol A-bis-(2-hydroxyethyl ether)-bis-acrylate, polytetrafluoroethylene, N,N'-ethylene-bis-tetrabromophthalimide.

4. Process according to claim 1, characterized in that the component A, in the absence of any auxiliary agents, is added in an amount equal to, or lower than, 0,6 phr, whilst in the presence of any auxiliary agent, it is present in an amount equal to, or lower than, 0,4 phr.

5. Process according to claim 1, characterized in that the component B is added in an amount equal to, or lower than, 0,8 phr.

6. Process according to claim 1, characterized in that the metals of the Group I for forming the salts of component A are sodium and potassium.

**Patentansprüche für die Vertragsstaaten: BE CH DE FR GB IT LI LU NL SE**

1. Zusammensetzung aus selbstlöschenden Polycarbonaten mit einem Molgewicht zwischen 10.000 und 100.000, die nachstehend angegebene Stoffe enthält:

A) wenigstens einen Zustatzstoff, der aus einem anorganischen Metallsalz mit der allgemeinen Formel $(XSO_3)_nM$, $M(XO_3)_n$, $M(NO_3)_n$, $M(CNO)_n$, $M(SCN)_n$, $M[Fe(CN)_6]_n$, wobei X ein Halogen, M ein Metall der Gruppen I und/oder IIA und B der Tabelle des periodischen Elementensystems und n 1 oder 2 ist, und, auf Wunsch, nicht mehr als 3 phr (Anteile je 100 Harzanteile)

B) wenigstens eines unter folgenden Mitteln gewählten Hilfsmittels:

I) oligomere oder polymere Halogenäther,

II) Oligomere aus Phosgen und Tetrahalogenbisphenol A mit Phenylendgruppen und/oder Ester von Tetrahalogenbisphenol A mit organischen Karbonsäuren,

III) Halogenpolyäthylen

IV) Halogenimide,

V) Oktabromdiphenyloxyd, Decabromdiphenyloxyd, 1,2-Bis-(2,4,6-Tribromphenoxy)-Äthan, Tetrabrombisphenol A-Bis-(2,3-Dibrompropyläther),
wobei der Bestandteil A in Abwesenheit eines Hilfsmittels in einer Menge beigemischt wird, die gleich oder kleiner als 3 phr ist, während derselbe in Anwesenheit irgendeines Hilfsmittels in einer Menge beigemischt wird, die gleich oder kleiner als 2 phr ist.

2. Zusammensetzung nach Anspruch 1, wobei der Bestandteil A unter folgenden Stoffen gewählt wird: Kaliumfluorsulfonat, Kaliumchlorsulfonat, Kalziumchlorzulfonat, Zinkchlorsulfonat, Kaliumbromat, Natriumbromat, Kaliumjodat, Kaliumnitrat, Natriumnitrat, Kaliumzyanat, Kaliumschwefelzyanat, Natriumschwefelzyanat und Kaliumferrozyanid.

3. Zusammensetzung nach Anspruch 1, wobei der Bestandteil B unter folgenden Stoffen gewählt wird: bromiertes Polyphenyloxyd (Br etwa 67%), Oligomer (Polymerisationsgrad 3 bis 6) aus Phosgen und Tetrabrombisphenol A mit Phenylendgruppen, Tetrabrombisphenol A-Bis-(2-Hydroxyäthyläther)-Bis-Akrylat, Polytetrafluoräthylen, N,N'-Äthylen-Bis-Tetrabromphtalimid.

4. Zusammensetzung nach Anspruch 1, wobei der Bestandteil A in Abwesenheit eines Hilfsmittels in einer Menge beigemischt wird, die gleich oder kleiner als 0,6 phr ist, während derselbe in Anwesenheit irgendeines Hilfsmittels in einer Menge beigemischt wird, die gleich oder kleiner als 0,4 phr ist.

5. Zusammensetzung nach Anspruch 1, wobei der Bestandteil B in einer Menge beigemischt wird, die gleich oder kleiner als 0,8 phr ist.

6. Zusammensetzung nach Anspruch 1, wobei die Metalle der Gruppe I zur Bildung der Salze des Bestandteils A Natrium und Kalium sind.

**Patentansprüche für den Vertragsstaat: AT**

1. Verfahren zur Vorbereitung einer selbstlöschenden Polycarbonatzusammensetzung, dadurch gekennzeichnet, dass es die Stufe umfasst, bei der einem Polycarbonat mit einem Molgewicht zwischen 10.000 und 100.000 nachstehend angegebene, die Selbstlöschung fördernde Mittel beigemengt werden:

A) wenigstens einen Zusatzstoff, der aus einem anorganischen Metallsalz mit der allgemeinen Formel $(XSO_3)_nM$, $M(XO_3)_n$, $M(NO_3)_n$, $M(CNO)_n$, $M(SCN)_n$, $M[Fe(CN)_6]_n$ besteht, wobei X ein Halogen, M ein Metall der Gruppen I und/oder IIA und B der Tabelle des periodischen Elementensystems und n 1 oder 2 ist, und, auf Wunsch, nicht mehr als 3 phr (Anteile je 100 Harzanteile)

B) wenigstens eines unter folgenden Mitteln gewählten Hilfsmittels:

I) oligomere oder polymere Halogenäther,

II) Oligomere aus Phosgen und Tetrahalogenbisphenol A mit Phenylendgruppen und/oder Ester von Tetrahalogenbisphenol A mit organischen Karbonsäuren,

III) Halogenpolyäthylen

IV) Halogenimide,

V) Oktabromdiphenyloxyd, Decabromdiphenyloxyd, 1,2-Bis-(2,4,6-Tribromphenoxy)-Äthan, Tetrabrombisphenol A-Bis-(2,3-Dibrompropyl-Äther),
wobei der Bestandteil A in Abwesenheit eines Hilfsmittels in einer Menge beigemischt wird, die gleich oder kleiner als 3 phr ist, während derselbe in Anwesenheit irgendeines Hilfsmittels in einer Menge beigemischt wird, die gleich oder kleiner als 2 phr ist.

2. Verfahren nach Anspruch 1, dadurch gekennzeichnet, dass der Bestandteil A unter folgenden Stoffen gewählt wird: Kaliumfluorsulfonat, Kaliumchlorsulfonat, Kalziumchlorsulfonat, Zinkchlorsulfonat, Kaliumbromat, Natriumbromat, Kaliumjodat, Kaliumnitrat, Natriumnitrat, Kaliumzyanat, Kaliumschwefelzyanat, Natriumschwefelzyanat und Kaliumferrozyanid.

3. Verfahren nach Anspruch 1, dadurch gekennzeichnet, dass der Bestandteil B unter folgenden Stoffen gewählt wird: bromiertes Polyphenyloxyd (Br etwa 67%), Oligomer (Polymerisationsgrad 3 bis 6) aus Phosgen und Tetrabrombisphenol A mit Phenylendgruppen, Tetrabrombisphenol A-Bis-(2-Hydroxyäthyl-äther)-Bis-Akrylat, Polytetrafluoräthylen, N,N'-Äthylen-Bis-Tetrabromphtalimid.

4. Verfahren nach Anspruch 1, dadurch gekennzeichnet, dass der Bestandteil A in Abwesenheit eines Hilfsmittels in einer Menge beigemischt wird, die gleich oder kleiner als 0,6 phr ist, während derselbe in Anwesenheit irgendeines Hilfsmittels in einer Menge beigemischt wird, die gleich oder kleiner als 0,4 phr ist.

5. Verfahren nach Anspruch 1, dadurch gekennzeichnet, dass der Bestandteil B in einer Menge beigemischt wird, die gleich oder kleiner als 0,8 phr ist.

6. Verfahren nach Anspruch 1, dadurch gekennzeichnet, dass die Metalle der Gruppe I zur Bildung der Salze des Bestandteils A Natrium und Kalium sind.

**Revendications pour les Etats contractants: BE CH DE FR GB LI LU NL SE**

1. Composition de polycarbonate auto-extinguible, présentant une masse moléculaire comprise entre 10 000 et 100 000, contenant:

A) au moins un adjuvant consistant en un sel métallique minéral, présentant la formule générale $(XSO_3)_nM$, $M(XO_3)_n$, $M(NO_3)_n$, $M(CNO)_n$, $M(SCN)_n$, $M[Fe(CN)_6]_n$, dans laquelle X est un halogène, M est un métal des Groupes I et/ou IIA et B du Tableau Périodique des Eléments, et n vaut 1 ou 2; et, éventuellement, pas plus de 3 ppc (parties pour 100 parties de résine) de

B) au moins un agent auxiliaire choisi parmi:

i) des éthers halogénés oligomères ou polymères;

ii) des oligomères de phosgène et du bisphénol A tétrahalogéné, comportant des groupes terminaux phényle, et/ou des esters du bisphénol A tétrahalogéné avec des acides carboxyliques organiques;

iii) un polyéthylène halogéné;

iv des imides halogéné;

v) l'octabromodiphényloxyde, le décabromodiphényoxyde, le 1,2-bis(2,4,6-tribromophénoxy-éthane, le tétrabromobisphénol A-bis-(2,3-dibromopropyl éther),

le composant A, en l'absence d'agent auxiliaire, étant ajouté en une quantité égale ou inférieure à 3 ppc, alors qu'en présence d'un agent auxiliaire quelconque, il est ajouté en une quantité égale ou inférieure à 2 ppc.

2. Composition conforme à la revendication 1, dans laquelle le composant A est choisi parmi: le fluorosulfonate de potassium, le chlorosulfonate de potassium, le chlorosulfonate de calcium, le chlorosulfonate de zinc, le bromate de potassium, le bromate de sodium, l'iodate de potassium, le nitrate de potassium, le nitrate de sodium, le cyanate de potassium, le thiocyanate de potassium, le thiocyanate de sodium, et le ferrocyanure de potassium.

3. Composition conforme à la revendication 1, dans laquelle le composant B est choisi parmi: le polyoxyphénylène bromé (environ 67% de Br), un oligomère (degré de polymérisation de 3 à 6) du phosgène et du tétrabromobisphénol A, comportant des groupes terminaux phényle, le tétrabromobisphénol A-bis-(2-hydroxyéthyl-éther)-bis-acrylate, le polytétrafluoroéthylène, le N,N'-éthylène-bis-tétrabromophtalimide.

4. Composition conforme à la revendication 1, dans laquelle le composant A, en l'absence de tout agent auxiliaire, est ajouté en une quantité égale ou inférieure à 0,6 ppc, alors qu'en présence d'un agent auxiliaire quelconque, il est présent en une quantité égale ou inférieure à 0,4 ppc.

5. Composition conforme à la revendication 1, dans laquelle le composant B est ajouté en une quantité égale ou inférieure à 0,8 ppc.

6. Composition conforme à la revendication 1, dans laquelle les métaux du groupe I formant les sels pour le composant A sont le sodium et le potassium.

**Revendications pour l'Etat contractant: AT**

1. Procédé de préparation d'une composition de polycarbonate auto-extinguible, caractérisé en ce qu'il comporte l'étape d'addition, à un polycarbonate présentant une masse moléculaire comprise entre 10 000 et 100 000, des agents suivants favorisant l'auto-extinction:

A) au moins un adjuvant consistant en un sel métallique minéral, présentant la formule générale $(XSO_3)_nM$, $M(XO_3)_n$, $M(NO_3)_n$, $M(CNO)_n$, $M(SCN)_n$, $M[Fe(CN)_6]_n$, dans laquelle X est un halogène, M est un métal des Groupes I et/ou IIA et B du Tableau Périodique des Eléments, et n vaut 1 ou 2; et, éventuellement, pas plus de 3 ppc (parties pour 100 parties de résine) de

B) au moins un agent auxiliaire choisi parmi:

i) des éthers halogénés oligomères ou polymères;

ii) des oligomères de phosgène et du bisphénol A tétrahalogéné, comportant des groupes terminaux phényle, et/ou des esters du bisphénol A tétrahalogéné avec des acides carboxyliques organiques;

iii) un polyéthylène halogéné;

iv des imides halogéné;

v) l'octabromodiphényloxyde, le décabromodiphényoxyde, le 1,2-bis(2,4,6-tribromophénoxy-éthane, le tétrabromobisphénol A-bis-(2,3-dibromopropyl éther),

le composant A, en l'absence d'agent auxiliaire, étant ajouté en une quantité égale ou inférieure à 3 ppc, alors qu'en présence d'un agent auxiliaire quelconque, il est ajouté en une quantité égale ou inférieure à 2 ppc.

2. Procédé conforme à la revendication 1, caractérisé en ce que le composant A est choisi parmi: le fluorosulfonate de potassium, le chlorosulfonate de potassium, le chlorosulfonate de calcium, le chlorosulfonate de zinc, le bromate de potassium, le bromate de sodium, l'iodate de potassium, le nitrate de potassium, le nitrate de sodium, le cyanate de potassium, le thiocyanate de potassium, le thiocyanate de sodium, et le ferrocyanure de potassium.

3. Procédé conforme à la revendication 1, caractérisé en ce que le composant B est choisi parmi: le polyoxyphénylène bromé (environ 67% de Br), un oligomère (degré de polymérisation de 3 à 6) du phosgène et du tétrabromobisphénol A, comportant des groupes terminaux phényle, le tétrabromobisphénol A-bis-(2-hydroxyéthyl-éther)-bis-acrylate, le polytétrafluoroéthylène, le N,N'-éthylène-bis-tétrabromophtalimide.

4. Procédé conforme à la revendication 1, caractérisé en ce que le composant A, en l'absence de tout agent auxiliaire, est ajouté en une quantité égale ou inférieure à 0,6 ppc, alors qu'en présence d'un agent auxiliaire quelconque, il est présent en une quantité égale ou inférieure à 0,4 ppc.

5. Procédé conforme à la revendication 1, caractérisé en ce que le composant B est ajouté en une quantité égale ou inférieure à 0,8 ppc.

6. Procédé conforme à la revendication 1, caractérisé en ce que les métaux du groupe I formant les sels pour le composant A sont le sodium et le potassium.